Europäisches Patentamt

European Patent Office

Office européen des brevets

(19)

(11) Numéro de publication : 0 542 606 A1

(12) DEMANDE DE BREVET EUROPEEN

(21) Numéro de dépôt : 92403007.5

(22) Date de dépôt : 06.11.92

(51) Int. Cl.⁵ : F02K 9/80, F42B 10/66

(30) Priorité : 15.11.91 FR 9114097

(43) Date de publication de la demande :
19.05.93 Bulletin 93/20

(84) Etats contractants désignés :
DE FR GB SE

(71) Demandeur : THOMSON-BRANDT
ARMEMENTS
F-45240 La Ferté St. Aubin (FR)

(72) Inventeur : Boissiere, Bruno
THOMSON-CSF, SCPI, 50, rue J.P. Timbaud
F-92402 Courbevoie Cedex (FR)
Inventeur : Beaufay, Denis
THOMSON-CSF, SCPI, 50, rue J.P. Timbaud
F-92402 Courbevoie Cedex (FR)
Inventeur : Lolive, Jacky
THOMSON-CSF, SCPI, 50, rue J.P. Timbaud
F-92402 Courbevoie Cedex (FR)

(74) Mandataire : Benoit, Monique et al
THOMSON-CSF, SCPI, B.P. 329, 50, rue
Jean-Pierre Timbaud
F-92402 Courbevoie Cédex (FR)

(54) Commutateur de jets à verrouillage pneumatique.

(57)   Le commutateur selon l'invention alimente au moins deux tuyères. Il comporte des chambres de sortie (3, 4) reliées aux tuyères, des chambres d'alimentation (7, 8) reliées à des conduits d'arrivée de gaz (G) et un barreau mobile (2) dont la position permet de fermer alternativement soit l'une, soit l'autre des cloisons (9, 10) séparant les chambres de sortie (3, 4) des chambres d'alimentation (7, 8). Le barreau mobile (2) contient des conduits d'emprunt (25, 26) reliant les chambres de sortie (3, 4) à des chambres de blocage (21, 22) fermées par des vannes (17, 18), les chambres de blocage (21, 22) étant séparées des chambres d'alimentation (7, 8) chacune par une cloison mobile (23, 24) solidaire du barreau mobile (2).

FIG.1

EP 0 542 606 A1

La présente invention concerne un commutateur de jets à verrouillage pneumatique. Elle s'applique notamment à la maîtrise de trajectoires d'engins dans l'espace, ces engins étant mus par des poussées provoquées par des gaz qu'ils libèrent. Plus généralement, elle s'applique au contrôle du tangage, du lacet et du roulis d'engins aériens dans des applications où les gouvernes aérodynamiques s'avèrent inefficaces comme c'est le cas par exemple à basse vitesse ou en très haute altitude, lorsque le vide est presque atteint.

Pour diriger des engins dans l'espace par poussées de gaz, une solution consiste généralement, à partir d'une source de gaz unique, par exemple une combustion d'un bloc de propergol, à commuter des jets de gaz provenant de cette source vers des tuyères de sortie dont les directions sont telles qu'elles permettent le contrôle des mouvements de l'engin, au niveau du roulis, du tangage ou du lacet ; les jets de gaz sortant d'une tuyère imposant à l'engin une poussée inverse à leur direction en raison du principe de conservation de la quantité de mouvement. Un organe important pour la maîtrise de ces mouvements est donc le commutateur de jets ; celui-ci commute par exemple les jets de gaz d'une tuyère à l'autre en fonction de la trajectoire définie. De nombreux types de commutateurs de jets ont déjà été réalisés. Par exemple, le commutateur décrit dans le brevet US. 4 413 795, comporte un réseau pneumatique complexe et la commutation se fait par perturbation de l'écoulement principal grâce à un emprunt de gaz qui joue le rôle d'obturateur. Ce type de système provoque, de façon inhérente, des fuites, ce qui augmente la consommation de gaz et diminue donc le rendement. Les commutateurs décrits par les brevets français 2 538 098 et 2 588 372 sont moins compliqués du point de vue pneumatique grâce notamment à l'utilisation d'un barreau de géométrie très simple. Ces commutateurs comportent des vannes commandées par des électro-aimants. Pour commuter les jets de gaz d'une tuyère à l'autre, il faut simultanément désactiver un électro-aimant et en activer un autre. De plus, dans ces systèmes, pour assurer une commutation, un électro-aimant doit travailler à entrefer maximum, ce qui ne permet pas la diminution des temps de commutation. Par ailleurs, les structures de ces commutateurs sont telles que les électro-aimants sont de taille, de poids et de coûts importants. Ils consomment de plus beaucoup d'énergie.

Le but de l'invention est de pallier les inconvénients précités en prévoyant notamment un barreau mobile dont le mouvement est commandé par le gaz lui-même et des vannes très simples..

A cet effet, l'invention a pour objet un commutateur de jets à verrouillage pneumatique alimentant au moins deux tuyères, comportant des chambres de sortie reliées aux tuyères, des chambres d'alimentation reliées à des conduits d'arrivée de gaz, un barreau mobile dont la position permet de fermer alternativement soit l'une, soit l'autre des cloisons séparant les chambres de sortie des chambres d'alimentation, des chambres de blocage fermées par des vannes, caractérisé en ce que le barreau mobile contient des conduits d'emprunt reliant les chambres de sortie aux chambres de blocage, les chambres de blocage étant séparées des chambres d'alimentation chacune par une cloison mobile solidaire du barreau mobile et dont la surface au contact des chambres de blocage est supérieure à la surface des extrémités du barreau mobile, une vanne étant préalablement fermée, cette vanne étant associée à la chambre de blocage reliée à la chambre de sortie fermée par rapport à sa chambre d'alimentation, l'ouverture de la chambre de sortie sur sa chambre d'alimentation par déplacement du barreau mobile étant déclenchée par l'ouverture de la vanne associée à la chambre de blocage reliée à la chambre de sortie ouverte sur sa chambre d'alimentation.

L'invention a pour principaux avantages qu'elle permet une diminution de la consommation de gaz et de la consommation électrique des électro-aimants, qu'elle permet la diminution de la taille, du poids et du coût de ces derniers, enfin qu'elle permet d'atteindre des temps de commutation très courts.

D'autres caractéristiques et avantages de l'invention apparaîtront à l'aide de la description qui suit, faite en regard des dessins annexés qui représentent :
- la figure 1, une vue en coupe d'un mode de réalisation possible d'un commutateur de jets selon l'invention,
- la figure 2, une illustration d'un commutateur de jets selon l'invention,
- les figures 3a et 3b, des illustrations de bilans de forces exercés sur un barreau mobile d'un commutateur selon l'invention,
- les figures 4a, 4b, 4c et 4d, des états successifs d'un électro-aimant de commande.

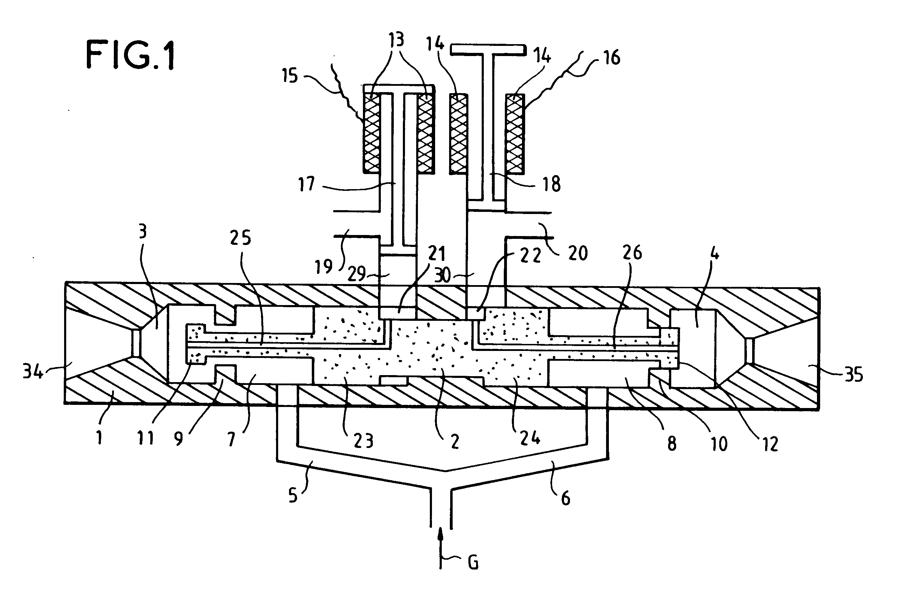

La figure 1 présente une vue en coupe d'un mode de réalisation possible d'un commutateur de jets selon l'invention. Il est principalement constitué d'un corps dont la coupe est hachurée, dans lequel se meut un barreau mobile 2 à symétrie de révolution par exemple. Ce commutateur de jets permet d'alimenter deux tuyères 34 et 35 par l'intermédiaire de chambres de sortie 3 et 4 situées chacune à l'une de ses extrémités, ces tuyères peuvent être orientées de façon quelconque. Il est lui-même alimenté par un jet de gaz symbolisé par la flèche G, le gaz empruntant les conduits d'arrivée 5 et 6. Le gaz d'alimentation peut être, par exemple, un gaz chaud provenant de la combustion d'un bloc de propergol ou un gaz provenant d'un volume sous pression. Ces conduits débouchent à l'intérieur du commutateur dans des chambres 7 et 8, appelées chambres d'alimentation. La chambre d'alimentation 7 est séparée de la chambre de sortie par une cloison ouverte 9 du corps 1 du commutateur, la chambre d'alimentation 8 est séparée de la chambre de sortie 4 par une cloison ouverte 10. Les chambres de sortie 3, 4 peuvent être isolées des chambres d'alimentation 7, 8 grâce à leur fermeture par les extrémités 11, 12 du barreau mobile 2. Des électro-aimants dont les bobines 13, 14 sont alimentées par des lignes 15, 16 commandent respectivement la position de pistons 17, 18. Ceux-ci, selon leurs positions, obturent des chambres 21, 22 du commutateur appelées chambre de blocage, par rapport à des conduits d'échappement 19, 20, au contact par exemple de la pression atmosphérique. La chambre de blocage 21 est séparée hermétiquement de la chambre d'alimentation 7 par une partie plus large 23 du barreau mobile 2, faisant office de cloison solidaire du barreau 2. De même, la chambre de blocage 22 est séparée de la chambre d'alimentation 8 par une partie plus large 24 du barreau mobile 2. Les parties 23 et 24 du barreau mobile seront par la suite appelées cloisons mobiles. Du gaz peut passer de la chambre de sortie 3 vers la chambre de blocage 21 par l'intermédiaire d'un conduit 25, appelé conduit d'emprunt, intérieur au barreau mobile 2. De même, du gaz peut passer de la chambre de sortie 4 vers la chambre de blocage 22 par l'intermédiaire d'un conduit d'emprunt 26 intérieur au barreau mobile 2.

Sur la figure 1, le commutateur selon l'invention est ouvert du côté de la chambre de sortie 3 et fermé du côté de la chambre de sortie 4. La chambre d'alimentation 8, les conduits d'alimentation 5 et 6, la chambre d'alimentation 7, la chambre de sortie 3, le conduit d'emprunt 25 et la chambre de blocage 21 sont à la pression du gaz d'alimentation. La chambre de sortie 4, le conduit d'emprunt 26, la chambre de blocage 22 sont à la pression ambiante, par exemple la pression atmosphérique. A partir de l'état illustré par la figure 1, stable, une communication consiste à ouvrir la cloison 10 par l'extrémité 12 du barreau mobile 2 et à fermer la cloison 9 par l'extrémité 11 du barreau mobile 2.

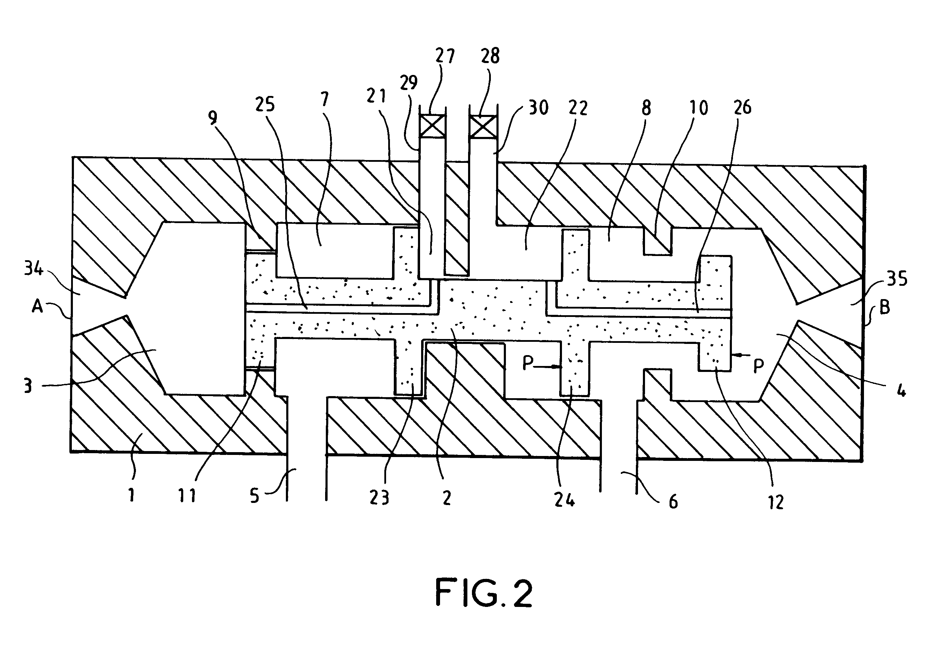

La figure 2 illustre le fonctionnement du commutateur selon l'invention. Sur cette figure, le commutateur est en position fermée du côté de la chambre de sortie 3. Les vannes réalisées par les pistons de la figure 1 sont symbolisées par les signes 27 et 28. En fait, il est possible d'envisager tout type de vanne, et d'autres moyens que les pistons et les électro-aimants pourraient être employés. Les flèches associées à la lettre P symbolisent la force exercée par la pression du gaz sur les parois transversales du barreau mobile 2. D'après l'alimentation en gaz présentée à la figure 2, la chambre de sortie 4, la chambre d'alimentation 8, la chambre de blocage 22 et la chambre d'alimentation 7 sont à la pression du gaz d'alimentation. Cette pression est notée P, valeur relative par rapport à la pression ambiante, la pression atmosphérique par exemple. Les pressions des chambres de sortie 3, 4 et de blocage 21, 22 sont toujours les mêmes grâce aux conduits d'emprunts 25, 26. Une première condition de bon fonctionnement est qu'en position fermée, le barreau mobile 2 reste stable. Selon l'invention, cela est possible d'une part, grâce aux conduits d'emprunts 25 et 26 et d'autre part, grâce à la valeur des surfaces des extrémités 11, 12 et parties 23, 24 formant cloison du barreau mobile 2. Pour le vérifier, il suffit de faire le bilan des forces poussant le barreau mobile vers un point A situé au niveau de la tuyère 34 et le bilan des forces poussant le mobile vers un point B, situé du côté de la tuyère opposé 35 dans le cas où la vanne 28 est fermée par exemple, l'état de la vanne 27 étant indifférent. La pression étant la même dans les deux chambres d'alimentation 7 et 8, les forces dues à ces pressions s'annulent donc.

Pour le bilan des forces poussant le barreau mobile vers le point B, c'est-à-dire maintenant la cloison 9 fermée, donc le commutateur fermé au niveau de la chambre de sortie 3, à cause de la butée de la partie 23 sur le corps 1, il faut considérer la pression intérieure à la chambre de blocage 22 s'exerçant sur la face transversale de la cloison mobile 24 et la pression P intérieure à la chambre de sortie 4 s'exerçant sur la face de l'extrémité 12 du barreau mobile 2, cette force relative est égale à :

$$F_B = P (S_{cloison\ mobile} - S_{extrémité}) \quad (1)$$

où P est la pression relative par rapport à la pression ambiante, $S_{cloison\ mobile}$ est la surface de la cloison mobile 24 en contact avec la chambre de blocage 22, $S_{extrémité}$, la surface de la face de l'extrémité 12 du barreau mobile en regard du point B.

De même, il est aisé de vérifier que la force relative poussant le barreau mobile vers le point A est égale à :

$$F_A = P\ amb (S_{cloison\ mobile} - S_{extrémité}) \quad (2)$$

La pression ambiante relative P amb vaut ici 0, et les surfaces de la cloison mobile 23 au contact de la chambre de blocage 21 ainsi que la surface de la face de l'extrémité 11 en regard du point A sont les mêmes que celles définies précédemment.

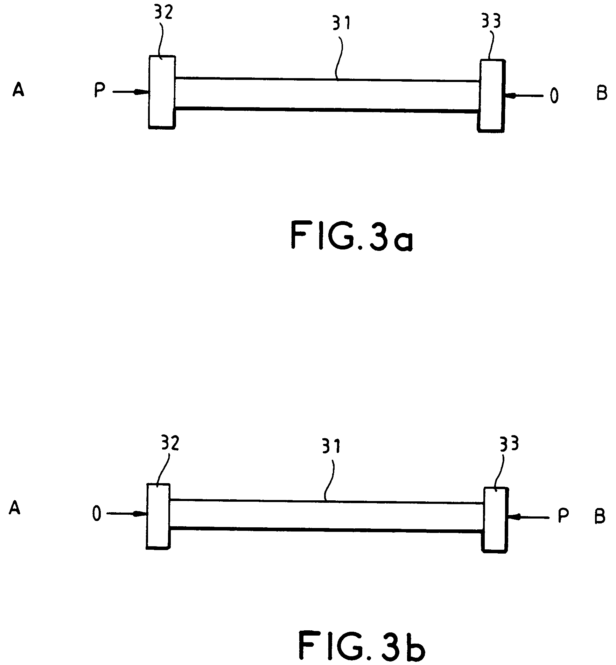

Il est bien évident que la pression relative P du gaz est très supérieure à la pression ambiante ou atmosphérique. En conséquence, pour que le barreau mobile 2 reste en position stable telle que représentée par la figure 2, il suffit que $F_B$ soit positive donc que la surface des cloisons mobiles 23, 24 en contact avec les chambres de blocage 21, 22 soient supérieures aux surfaces des extrémités 11, 12 du barreau mobile. Aux surfaces près, le bilan des forces est illustré par la figure 3a où le barreau mobile 2 est symbolisé par l'élément 31 dont une extrémité 32 subit la pression relative P et l'autre extrémité 33 la pression ambiante de valeur relative 0, les positions des points A et B de la figure 2 ayant été représentées.

Selon l'invention, la vanne 27 ayant été préalablement fermée, la commutation de jets de gaz, donc en fait la commutation du barreau mobile 2 de la fermeture de la cloison 9 vers la fermeture de la cloison 10, s'effectue en ouvrant la vanne 28. Dans ce cas, la chambre de blocage 22 devient à la pression atmosphérique par exemple. A cet instant le bilan de force exprimé par la relation (1) devient :

$$F_B = 0 \times S_{cloison\ mobile} - P \times S_{extrémité} \quad (3)$$

bien que $S_{cloison\ mobile}$ soit supérieure à $S_{extrémité}$, P étant très supérieure à 0, $F_B$ est négative, la force $F_A$ définie par la relation (2) restant inchangée, le barreau mobile 2 se déplace vers le point A, de manière à ouvrir la cloison 9 et mettre ainsi la chambre de sortie 3 à la pression P du gaz délivré par le conduit d'alimentation 5, les gaz de poussée s'échappent vers la tuyère 34 liée à la chambre de sortie 3, tandis que la cloison 10 est fermée par l'extrémité 12 du barreau mobile, la chambre de sortie 4 revenant à la pression ambiante ou atmosphérique, la commutation de jet de gaz est réalisée. Par ailleurs, la vanne 27 ayant été préalablement fermée, grâce au conduit d'emprunt 25, la chambre de blocage 21 devient soumise à la même pression que la chambre de sortie 3 c'est-à-dire à la pression du gaz d'alimentation. En fait, c'est la pression du gaz occupant cette chambre de blocage 21 qui permet de maintenir le barreau mobile 2 dans une position bloquée. Les bilans de forces précédemment établis deviennent inversés, ils sont illustrés par la figure 3b, et en conséquence, le barreau mobile 2 reste en position stable, fermant la chambre de sortie 4. Pour le faire revenir à la position précédente, il faudra au préalable fermer la vanne 28, puis ouvrir la vanne 27, le phénomène décrit ci-dessus se reproduira. Pour que ces commutations selon l'invention puissent avoir lieu il faut que les conduits d'échappement 29, 30 en sortie des chambre de blocage aient un diamètre supérieur aux conduits d'emprunts 25, 26 pour qu'en cas d'ouverture, les chambres de blocage puissent se retrouver à la pression atmosphérique, dans le cas contraire, elles resteraient soumise à la pression du gaz, les conduits d'échappement joueraient alors le rôle de conduits de fuite.

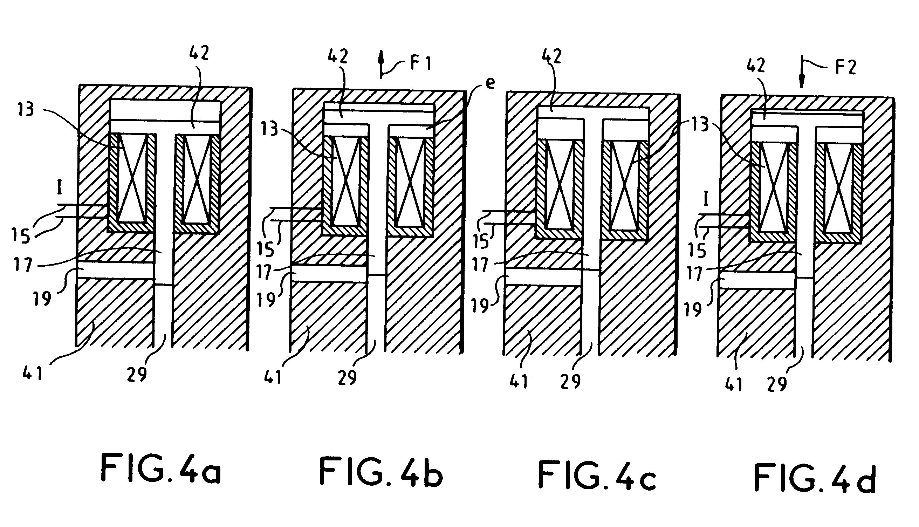

Dans le cas où les vannes 27, 28 sont réalisées par des pistons commandés par des électro-aimants par exemple, le commutateur de jets selon l'invention permet de minimiser les dimensions de l'électro-aimant. Comme le montre la figure 1, avant commutation, le piston 17 obture le conduit d'échappement de la chambre de blocage 21 pour maintenir celle-ci sous la pression du gaz. Pour cela, il suffit d'alimenter la bobine 13 de l'électro-aimant en courant via la ligne 15. Les figures 4a, 4b, 4c et 4d illustrent les différents états d'un électro-aimant en fonction des différents états d'un commutateur selon l'invention. Ces figures reprennent l'électro-aimant constitué de la bobine 13 vue en coupe et du piston 17 de la figure 1. La partie inférieure du piston 17 n'est plus élargie, et correspond à un cas fréquent où les conduits d'échappement 19, 20 ont une section relativement faible. La structure 41 permet de raccorder l'électro-aimant et les conduits d'échappement au corps 1 du commutateur selon l'invention.

La figure 4a présente l'état d'un électro-aimant avant commutation. La tige du piston 17 qui commande cette commutation obture le conduit d'échappement 19. L'électro-aimant a à vaincre les efforts de pression exercés sur le diamètre du conduit d'échappement 19. Ce dernier étant généralement petit, ces efforts sont minimes. De plus, dans cette phase, l'électro-aimant travaillant à entrefer nul, un courant réduit I, amené par les fils de la ligne 15, suffit à générer une force suffisante pour que la partie supérieure élargie 42 du piston 17 reste en contact de l'électro-aimant. Cet entrefer est défini par l'espace e entre la bobine 13 de l'électro-aimant et la partie supérieure élargie 42 du piston 17, comme l'indique la figure 4b.

Sur cette figure, la commutation a été déclenchée en annulant le courant I d'alimentation de l'électro-aimant circulant dans la ligne 15. Le piston 17 n'étant plus soumis qu'à l'effet dû à la pression des gaz, celui-ci se déplace suivant la direction indiquée par la flèche F1 et ouvre le conduit d'échappement 29 vers le conduit d'échappement 19. Le piston 17 étant très léger, ce déplacement est très rapide. Dès l'ouverture du conduit d'échappement 29, la pression dans celui-ci chute énormément, il en est de même dans la chambre de blocage 21 reliée au conduit d'échappement 29.

La figure 4c représente un état stable où la commutation est effectuée, il n'y a plus de pression supérieure à la pression ambiante ou atmosphérique dans le conduit 29. Sur cette figure, le piston est représenté en position haute, à entrefer maximum, mais en fait sa position est indifférente pour le fonctionnement du commutateur de jets selon l'invention. En effet, dans cet état la cloison 9 du commutateur est fermée et la chambre de sortie 3 étant à la pression ambiante, il en est de même pour la chambre 21 donc pour le conduit 29 grâce au conduit d'emprunt 25 et cela quelle que soit la position du piston 17. Néanmoins, pour préparer la commutation suivante, il est nécessaire d'obturer le conduit d'échappement 19, pour que lors de cette commutation, la chambre de blocage 21 reste à la pression des gaz. La phase de reblocage du piston 17 est présentée par la figure 4d. Pour bloquer la partie supérieure élargie 42 du piston 17 sur la bobine 13 de l'électro-aimant, l'électro-aimant est alimenté par un courant I. Dans le cas de la figure 4d, celui-ci travaille à entrefer maximum mais n'a plus à vaincre la pression due aux gaz, donc la consommation reste encore dans cette phase très modérée. De plus, cette phase de blocage du piston 17 peut commencer dès la chute de pression dans la chambre de blocage 21 donc dans le conduit 29 et le temps pour réaliser ce blocage peut durer jusqu'au début de la commutation suivante. La direction du mouvement du piston 17 est indiquée par la flèche F2.

Une fois le piston 17 bloqué au contact de l'électro-aimant, état illustré par la figure 4a, la chambre de blocage est prête à supporter la pression des gaz à laquelle elle sera soumise dès la commutation suivante qui sera déclenchée par l'autre électro-aimant 14 qui ouvrira la chambre de blocage 22 vers le conduit d'échappement 20.

Un commutateur de jets selon l'invention, s'il utilise des électro-aimants pour commander ses ouvertures, permet donc de les faire travailler à entrefer nul quand ils ont un effort de pression à vaincre et à entrefer maximum quand cet effort de pression a disparu. Cela permet donc de minimiser la taille et la masse des électro-aimants ainsi que leur consommation électrique et donc par là même, la taille et la masse des organes de génération électrique. Par ailleurs, il apparaît que pour déclencher une commutation, il suffit, comme dans le cas de la figure 4b, d'annuler un courant d'alimentation, ce qui permet de simplifier les procédures de commande et de diminuer les temps de commutation.

## Revendications

1. Commutateur de jets à verrouillage pneumatique alimentant au moins deux tuyères, comportant des chambres de sortie (3, 4) reliées aux tuyères, des chambres d'alimentation (7, 8) reliées à des conduits d'arrivée (5, 6) de gaz (G), un barreau mobile (2) dont la position permet de fermer alternativement soit l'une, soit l'autre des cloisons (9, 10) séparant les chambres de sortie (3, 4) des chambres d'alimentation (7, 8), des chambres de blocage (21, 22) fermées par des vannes (27, 28), caractérisé en ce que le barreau mobile (2) contient des conduits d'emprunt (25, 26) reliant les chambres de sortie (3, 4) aux chambres de blocage (21, 22), les chambres de blocage (21, 22) étant séparées des chambres d'alimentation (7, 8) chacune par une cloison mobile (23, 24) solidaire du barreau mobile (2) et dont la surface au contact des chambres de blocage (21, 22) est supérieure à la surface des extrémités (11, 12) du barreau mobile (2), une vanne (27) étant préalablement fermée, cette vanne étant associée à la chambre de blocage (21) reliée à la chambre de sortie (3) fermée par rapport à sa chambre d'alimentation (7), l'ouverture de la chambre de sortie (3) sur sa chambre d'alimentation (7) par déplacement du barreau mobile (2) étant déclenchée par l'ouverture de la vanne (28) associée à la chambre de blocage (22) reliée à la chambre de sortie (4) ouverte sur sa chambre d'alimentation (8).

2. Commutateur de jets selon la revendication 1 caractérisé en ce que les vannes (27, 28) sont des pistons (17, 18).

3. Commutateur de jets selon la revendication 2 caractérisé en ce que les pistons (17, 18) sont commandés par des électro-aimants (13, 14).

4. Commutateur de jets selon les revendications 1, 2 et 3 caractérisé en ce que le déplacement du barreau mobile (2) est déclenché par l'annulation du courant (I) dans un des électro-aimants (13, 14).

# FIG.1

EP 0 542 606 A1

FIG.2

EP 0 542 606 A1

FIG.3a

FIG.3b

FIG.4a    FIG.4b    FIG.4c    FIG.4d

EP 0 542 606 A1

Office européen des brevets

**RAPPORT DE RECHERCHE EUROPEENNE**

Numero de la demande

EP    92 40 3007

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | EP-A-0 060 726 (NORMALAIR - GARRETT) * page 2, ligne 11 - page 5, ligne 20; figure 1 * | 1,3,4 | F02K9/80 F42B10/66 |
| Y | US-A-3 721 402 (HOLLAND) * le document en entier * | 1,3,4 | |
| A | US-A-4 826 104 (BENNETT) * le document en entier * | 1,2 | |
| A,D | EP-A-0 112 755 (BRANDT) * le document en entier * | 1-4 | |
| A | US-A-4 078 495 (LEDDEN) * le document en entier * | 1-4 | |
| A | EP-A-0 149 947 (THOMSON - BRANDT) * le document en entier * | 1-4 | |

**DOMAINES TECHNIQUES RECHERCHES (Int. Cl.5)**

F02K
F42B

Le présent rapport a été établi pour toutes les revendications

| Lieu de la recherche | Date d'achèvement de la recherche | Examinateur |
|---|---|---|
| LA HAYE | 12 FEVRIER 1993 | IVERUS D. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

10